# EUROPÄISCHE PATENTANMELDUNG

(11) **EP 4 517 242 A2**
(43) Veröffentlichungstag der Anmeldung: **05.03.2025**
(21) Anmeldenummer: 24194909.8
(22) Anmeldetag: 16.08.2024
(51) Int. Cl.: F28D 7/00, F28D 9/00, F28F 3/14, H01M 10/613, H01M 10/625, H01M 10/6556, H01M 10/6568

(54) **ANORDNUNG FÜR EINEN TEMPERIERKREISLAUF**

(30) Priorität: 29.08.2023 DE 202023104914 U
(71) Anmelder: TI Automotive Technology Center GmbH, 76437 Rastatt (DE)
(72) Erfinder: Brixner, Sebastian, 68535 Edingen-Neckarhausen (DE); Merz, Werner, 76571 Gaggenau (DE); Kolb, Gerhard, 68789 St. Leon-Rot (DE); Sarstedt, Philip, 77876 Kappelrodeck (DE); Kocurek, Konrad, 43-100 Tychy (PL); Hoß, Nicolas, 76437 Rastatt (DE); Rojek, Pawel, 44-217 Rybnik (PL); Henning, Christian, 77694 Kehl (DE)
(74) Vertreter: Reiser & Partner Patentanwälte mbB

(57) **Zusammenfassung**

Anordnung (1) für einen Temperierkreislauf, umfassend ein Gehäuse (2), in welchem zumindest ein Kanal (3) für den Transport von Temperiermedien ausgebildet ist, wobei die Wandung des Gehäuses (2) aus Blech ausgebildet ist.

## Beschreibung

Die Erfindung betrifft eine Anordnung für einen Temperierkreislauf, umfassend ein Gehäuse, in welchem zumindest ein Kanal für den Transport von Temperiermedien ausgebildet ist.

Eine derartige Anordnung ist beispielsweise aus der US 2019/0039440 A1 bekannt.

Die dort gezeigte Anordnung findet in der Elektromobilität Einsatz, wo Klimatisierungseinrichtungen besonders hohen Anforderungen unterliegen. In der Elektromobilität besteht die Anforderung, dass nur ein beschränkter Bauraum zur Verfügung steht und die Klimatisierungseinrichtungen besonders kompakt ausgebildet sein müssen. Des Weiteren kann es erforderlich sein, neben dem Fahrgastinnenraum weitere Komponenten zu klimatisieren, beispielsweise die Elektromotoren, die Leistungselektronik, die Ladeeinheit und die elektrischen Speicherzellen.

Elektrofahrzeuge haben einen optimalen Wirkungsgrad nur in einem begrenzten Temperaturspektrum, daher kann es erforderlich sein, in Abhängigkeit der klimatischen Bedingungen und der geforderten Leistung die an die Klimatisierungseinrichtung angeschlossenen Komponenten zu wärmen oder zu kühlen. Dies erfordert eine komplexe Ansteuerung der Komponenten und eine aufwendige Führung des Temperiermediums, sodass die Anordnungen mehrere Fluidkanäle aufweisen und mit mehreren Ventilen ausgerüstet sind. Aus dem Stand der Technik ist es hierzu bekannt, eine Rohranordnung in Form eines Gussteils bereitzustellen, in welchem mehrere Fluidkanäle ausgebildet sind. Derartige Gehäuse sind jedoch vergleichsweise aufwendig in der Herstellung.

Die Temperierung, insbesondere die Kühlung, kann mittels eines Kältemittelkreislaufs erfolgen, in welchem ein Temperiermedium in Form eines Kältemittels, beispielsweise CO₂ (R722), ein halogenierter Kohlenwasserstoff (R1234yf) oder ein Kohlenwasserstoff, beispielsweise Propan (R290) zirkuliert. Bei einem auf CO₂ als Kältemittel basierenden Kältemittelkreislauf herrscht im Inneren des Kreislaufs mit 170 bar ein hoher Systemdruck. Die Temperaturen des Kältemittels auf der Basis von CO₂ bewegen sich dabei zwischen -40 °C und 180 °C. Die Temperaturen bei einem auf einem Kohlenwasserstoff basierenden Kältemittel bewegen sich zwischen -20 °C und 160 °C bei Drücken von 1 bar bis 35 bar.

Der Erfindung liegt die Aufgabe zugrunde, eine Anordnung für einen Temperierkreislauf bereitzustellen, der einfach und kostengünstig herstellbar ist.

Diese Aufgabe wird mit den Merkmalen von Anspruch 1 gelöst. Auf vorteilhafte Ausgestaltungen nehmen die Unteransprüche Bezug.

Die erfindungsgemäße Anordnung für einen Temperierkreislauf umfasst ein Gehäuse, in welchem zumindest ein Kanal für den Transport von Temperiermedien ausgebildet ist, wobei die Wandung des Gehäuses aus Blech ausgebildet ist.

Durch die Ausgestaltung aus Blech ist das Gehäuse besonders kostengünstig herstellbar. Dabei kommen insbesondere Stahlbleche und Aluminiumbleche in Betracht. Bleche sind in einer Vielzahl von Stahl-, bzw. Aluminiumqualitäten und Wanddicken verfügbar und können besonders einfach umgeformt werden. Je nach Formgebung des Gehäuses entsteht dabei ein Gehäuse, welches hohen mechanischen und thermischen Belastungen standhält und dadurch auch für den Transport von CO₂ als Kältemittel, bzw. Temperiermedium geeignet ist.

Vorzugsweise weist das Gehäuse zumindest ein erstes Gehäuseteil und ein zweites Gehäuseteil auf. Die Gehäuseteile können separat hergestellt und anschließend zu dem Gehäuse gefügt werden. Dies ermöglicht die Ausgestaltung des Gehäuses mit einer sehr großen Formenvielfalt, sodass die Anordnung an den zur Verfügung stehenden Bauraum und die Anforderungen an die Temperierung optimal angepasst sein kann. Bei der Ausgestaltung mit mehr als zwei Gehäuseteilen können mit besonders einfachen Mitteln mehrere voneinander getrennte Kanäle ausgestaltet werden.

Die Gehäuseteile können dabei insbesondere als Tiefziehteile oder Stanzteile ausgebildet sein. Bei dieser Ausgestaltung werden zunächst plattenförmige Blechabschnitte bereitgestellt und mittels Tiefziehen oder Stanzen in die gewünschte Form gebracht. In das Gehäuse können mehrere Öffnungen eingebracht sein, wobei insbesondere denkbar ist, dass die Öffnungen in einem Zug zusammen mit der Formgebung in die Gehäuseteile eingebracht werden. Dadurch reduzieren sich die für die Herstellung der Anordnung erforderlichen Fertigungsschritte und dadurch auch die Kosten. Insbesondere bei höheren Anforderungen an Toleranzen können die Gehäuseteile auch als Dreh- oder Frästeil ausgebildet sein. In diesem Zusammenhang ist insbesondere denkbar, dass zunächst die Gehäuseteile durch Tiefziehen erzeugt und anschließend die Öffnungen durch ein Dreh- oder Fräsverfahren in die Gehäuseteile eingebracht werden, um dort besonders genaue Passungen erzielen zu können. Werden die Gehäuseteile durch Stanzen erzeugt, können die Gehäuseteile durch Drehen oder Fräsen nachbearbeitet werden.

Im Inneren des Gehäuses und/oder in den Öffnungen können Funktionselemente eingebracht sein. Funktionselemente sind beispielsweise Ventile, Rückschlagventile, Sensoren, Wärmetauscher, Expansionsventile oder dergleichen.

Die Funktionselemente können formschlüssig und/oder stoffschlüssig in den Öffnungen der Gehäuseteile befestigt sein. Im Fall einer stoffschlüssigen Verbindung sind die Funktionselemente bereits durch die Verbindung mediendicht mit dem Gehäuse verbunden. Im Fall einer formschlüssigen Verbindung kann ein separates Dichtelement vorgesehen sein, beispielsweise ein O-Ring. Der in dem Gehäuseteil vorgesehene Dichtsitz für das Dichtelement kann dabei mittels Stanzen hergestellt sein. Hierbei ist vorteilhaft, dass zusätzliche Fertigungsschritte zur Herstellung eines Dichtsitzes entfallen können.

In dem Gehäuse können mehrere Kanäle ausgebildet sein. Dadurch können mehrere Temperiermedien durch die Anordnung geführt werden oder ein Temperiermedium eines Kühlkreislaufs kann die Anordnung in verschiedenen Aggregatszuständen durchströmen. Denkbar ist, dass in einem ersten Kanal ein Transport von Kältemittel zwischen Kondensator und Verdampfer erfolgt; dort ist das Kältemittel flüssig. In dem zweiten Kanal kann ein Transport zwischen Verdampfer und Kompressor erfolgen, dort ist das Kältemittel gasförmig. Der Transport kann auch in Richtung weiterer Komponenten erfolgen. Denkbar ist auch, dass das Expansionsventil in dem Gehäuse ausgebildet und einem Kanal zugeordnet ist.

Zwischen den Gehäuseteilen kann ein Trennelement aus Blech angeordnet sein. Vorzugsweise ist das Trennelement so ausgebildet, dass es die Kanäle separiert. Dabei kann das Blech gemäß einer einfachen und kostengünstigen Ausgestaltung flächig ausgebildet sein.

Denkbar ist aber auch, dass das Trennelement dreidimensional geformt ist. Diese Formgebung kann auch durch ein Stanzverfahren erfolgen. Grundsätzlich ist ein aus Blech ausgebildetes Trennelement kostengünstig herstellbar und durch das Stanzverfahren kann ein Trennelement mit einer großen Formenvielfalt hergestellt werden. Neben dem Stanzverfahren ist auch denkbar, eine Formgebung mittels Tiefziehen durchzuführen.

Es ist auch denkbar, dass das Trennelement als interner Wärmetauscher ausgebildet ist. Bei dieser Ausgestaltung ist vorteilhaft, wenn das Trennelement durch eine dreidimensionale Formgebung eine vergrößerte Oberfläche aufweist. Dies kann dadurch erfolgt sein, dass in das Trennelement Erhebungen und Vertiefungen eingebracht sind, die insbesondere in Form von Sicken vorliegen können.

Durch den internen Wärmetauscher kann der zwischen Verdampfer und Kompressor verlaufende Abschnitt des Kältemittelkreislaufs thermisch mit einem zwischen Kondensator und Expansionsventil verlaufenden Abschnitt des Kältekreislaufs gekoppelt werden und durch den internen Wärmeaustausch kann der Wirkungsgrad des Kältemittelkreislaufs erhöht werden.

Die Gehäuseteile können über eine Schweißverbindung oder eine Lötverbindung miteinander verbunden sein. Durch diese stoffschlüssige Verbindung sind die Gehäuseteile mediendicht und unlösbar miteinander verbunden.

Die Gehäuseteile können alternativ über eine Schraubverbindung miteinander verbunden sein. Bei dieser Verbindung ist vorzugsweise zwischen den Gehäuseteilen zumindest ein Dichtelement angeordnet. Die Verbindung der Gehäuseteile über eine Schraubverbindung ist mit höheren Kosten verbunden als die Ausgestaltung einer stoffschlüssigen Verbindung. Vorteilhaft ist aber, dass die Gehäuseteile zerstörungsfrei demontierbar sind. Durch das zwischen den Gehäuseteilen angeordnete Dichtelement ergibt sich eine mediendichte Verbindung der Gehäuseteile.

Die Anordnung kann eine Verteilstruktur einer Klimaanlage bilden. Dabei verteilt die Anordnung Temperiermedium zu den an die Anordnung angeschlossenen Komponenten. Durch Integration von Ventilen in Form von Schaltventilen, Proportionalventilen oder Rückschlagventilen kann der Transport zu den angeschlossenen Komponenten bedarfsweise erfolgen.

Insbesondere ist denkbar, dass die Anordnung eine Verteilstruktur einer Klimaanlage eines Elektrofahrzeugs bildet. Dort kann die Verteilstruktur wahlweise den Innenraum und/oder die Komponenten des elektrischen Antriebs des Elektrofahrzeugs temperieren.

Eine Ausgestaltung der Anordnung wird nachfolgend anhand der Figuren näher erläutert. Die Figuren zeigen, jeweils schematisch:
Fig. 1 eine Anordnung im Schnitt;
Fig. 2 eine Anordnung in der Draufsicht.

Die Figuren zeigen eine Anordnung 1 für einen Temperierkreislauf. Die Anordnung 1 bildet einen Bestandteil eines Kältemittelkreislaufs einer Klimaanlage und fungiert dort als Verteilstruktur. Die Anordnung 1 umfasst ein Gehäuse 2, in welches zumindest ein Kanal 3 für den Transport von Temperiermedium eingebracht ist. Das Temperiermedium ist vorliegend ein Kältemittel, konkret CO₂ (R744) oder ein halogenierter Kohlenwasserstoff (R1234yf). Die Anordnung 1 leitet das Kältemittel verschiedenen Komponenten des Kältemittelkreislaufs zu.

Die Komponenten des Kältemittelkreislaufs können direkt an das Gehäuse 2 angeschlossen sein. In Abhängigkeit des zur Verfügung stehenden Bauraums und des Abstands der Komponenten können diese auch über Rohrleitungen an den Gehäuse 2 angeschlossen sein.

Komponenten des Kältemittelkreislaufs sind dabei insbesondere Wärmetauscher, Verdampfer, Chiller, Kondensatoren, Gaskühler, Batteriekühlplatten, Kompressoren und Akkumulatoren. Diese Komponenten können mittels der Anordnung 1 wahlweise angesteuert und mit Kältemittel versorgt werden.

Die Wandung des Gehäuses 2 ist aus Blech ausgebildet. Bei der vorliegenden Ausgestaltung ist das Blech ein Stahlblech mit einer Wanddicke von 3 mm. Vorzugsweise beträgt die Wanddicke des Gehäuses 2 zwischen 1 mm und 5 mm.

Das Gehäuse 2 weist ein erstes Gehäuseteil 4 und ein zweites Gehäuseteil 5 auf, wobei die Gehäuseteile 4, 5 als Stanzteile ausbildet sind. In die Gehäuseteile 4, 5 und damit in das Gehäuse 2 sind mehrere Öffnungen 6 eingebracht. Die Formgebung der Gehäuseteile 4, 5 und das Einbringen der Öffnungen 6 erfolgt im Stanzverfahren in einem Arbeitsschritt. Zur Herstellung der Gehäuseteile 4, 5 wird zunächst ein plattenförmiges Blech bereitgestellt und mittels Stanzen geformt. Dabei erfolgt das Stanzen der äußeren Konturen der Gehäuseteile 4, 5, die dreidimensionale Formgebung und das Einbringen der Öffnungen 6 in die Gehäuseteile 4, 5 in einem Arbeitsschritt

Bei der vorliegenden Ausgestaltung sind die Gehäuseteile 4, 5 über eine Schweißverbindung stoffschlüssig miteinander verbunden. Alternativ ist denkbar, die Gehäuseteile 4, 5 über eine Lötverbindung miteinander zu verbinden. In einer weiteren alternativen Ausgestaltung können die Gehäuseteile 4, 5 über eine Schraubverbindung miteinander verbunden sein. Zumindest im Fall der Schraubverbindung ist zwischen den Gehäuseteilen 4, 5 ein Dichtelement in Form einer Flachdichtung oder in Form einer auf ein Gehäuseteil aufgebrachten Dichtkontur angeordnet.

Die Funktionselemente 7 umfassen Sensoren in Form von Temperatursensoren, Drucksensoren und Volumenstromsensoren sowie Ventile in Form von magnetischen Schaltventilen, Wegeventilen, Überdruckventilen und Rückschlagventilen.

Zwischen den Gehäuseteilen 4, 5 ist ein Trennelement 8 aus Blech angeordnet. Das Trennelement 8 separiert zwei Kanäle 3, 3' voneinander. Demensprechend ermöglicht das Trennelement 8 die Anordnung mehrerer Kanäle 3, 3' innerhalb des Gehäuses 2.

Das Trennelement 8 ist aus Blech, konkret aus Stahlblech ausgebildet und weist eine Wandstärke von 1 mm auf. Bei der vorliegenden Ausgestaltung sind in das Trennelement 8 Erhebungen und Vertiefungen in Form von Sicken eingebracht und das Trennelement 8 fungiert als interner Wärmetauscher. In einer alternativen Ausgestaltung ist das Trennelement 8 plattenförmig ausgebildet.

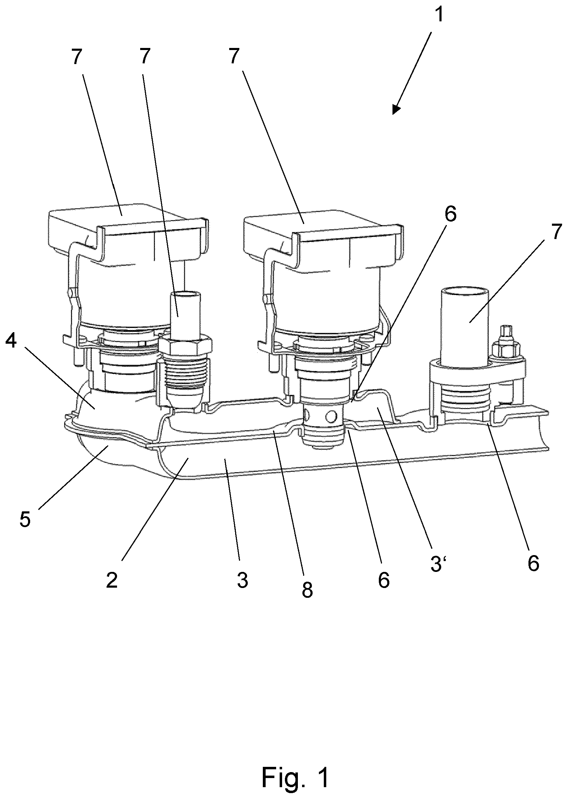

Figur 1 zeigt im Schnitt eine Anordnung 1 mit einem aus zwei stoffschlüssig miteinander verbundenen Gehäuseteilen 4, 5 zusammengesetzten Gehäuse 2. In das Gehäuse 2 sind Öffnungen 6 eingebracht, wobei in den Öffnungen 6 Funktionselemente 7 in Form von zwei Schaltventilen und einem Rückschlagventil angeordnet sind. Die Funktionselemente 7 sind in die Öffnungen 6 eingesteckt und mittels O-Ring-Dichtung mediendicht mit dem Gehäuse 2 verbunden. Des Weiteren sind auch in das Trennelement 8 Öffnungen eingebracht, so dass sich die Funktionselemente 7 durch das Trennelement 8 erstrecken und die Kanäle 3, 3' miteinander verbinden können.

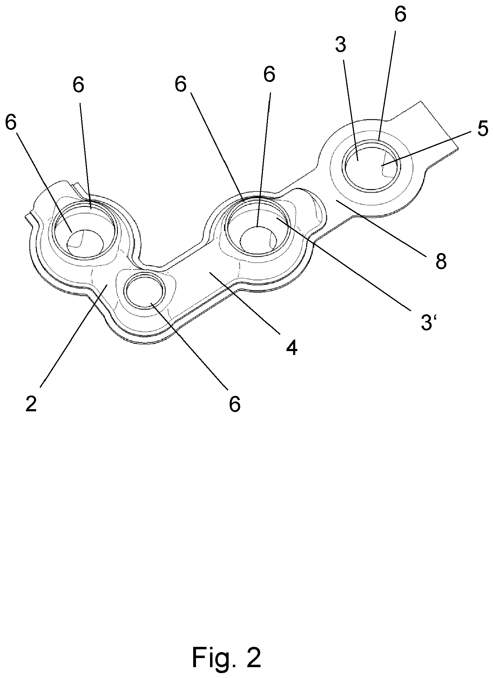

Figur 2 zeigt im Detail das Gehäuse 2 der Anordnung 1 gemäß Figur 1, bei welchem sich ein Gehäuseteil 4 nicht vollständig über das Gehäuse 2 erstreckt. Zwischen den Gehäuseteilen 4, 5 ist ein flächig ausgebildetes Trennelement 8 angeordnet. Ein Gehäuseteil 4 deckt das Trennelement 8 nicht vollständig ab, so dass das Trennelement 8 abschnittsweise auch als äußere Wandung des Gehäuses 2 fungiert. Diese Ausgestaltung ist besonders platzsparend.

## Patentansprüche

1. Anordnung (1) für einen Temperierkreislauf, umfassend ein Gehäuse (2), in welchem zumindest ein Kanal (3) für den Transport von Temperiermedien ausgebildet ist, **dadurch gekennzeichnet, dass** die Wandung des Gehäuses (2) aus Blech ausgebildet ist.

2. Anordnung nach Anspruch 1, **dadurch gekennzeichnet, dass** das Gehäuse (2) zumindest ein erstes Gehäuseteil (4) und ein zweites Gehäuseteil (5) aufweist.

3. Anordnung nach Anspruch 1 oder 2, **dadurch gekennzeichnet, dass** die Gehäuseteile (4, 5) als Tiefziehteile oder als Stanzteile ausgebildet sind.

4. Anordnung nach einem der Ansprüche1 bis 3, **dadurch gekennzeichnet, dass** in das Gehäuse (2) mehrere Öffnungen (6) eingebracht sind.

5. Anordnung nach Anspruch 4, **dadurch gekennzeichnet, dass** in den Öffnungen (6) Funktionselemente (7) angeordnet sind.

6. Anordnung nach einem der Ansprüche 1 bis 5, **dadurch gekennzeichnet, dass** in dem Gehäuse (2) mehrere Kanäle (3, 3`) ausgebildet sind.

7. Anordnung nach einem der Ansprüche 2 bis 6, **dadurch gekennzeichnet, dass** zwischen den Gehäuseteilen (4, 5) ein Trennelement (8) aus Blech angeordnet ist.

8. Anordnung nach Anspruch 7, **dadurch gekennzeichnet, dass** das Trennelement (8) die Kanäle (3, 3`) separiert.

9. Anordnung nach Anspruch 7 oder 8, **dadurch gekennzeichnet, dass** das Trennelement (8) als interner Wärmetauscher ausgebildet ist.

10. Anordnung nach einem der Ansprüche 2 bis 9, **dadurch gekennzeichnet, dass** die Gehäuseteile (4, 5) über eine Schweißverbindung oder eine Lötverbindung miteinander verbunden sind.

11. Anordnung nach Anspruch 10, **dadurch gekennzeichnet, dass** die Gehäuseteile (4, 5) mediendicht miteinander verbunden sind.

12. Anordnung nach einem der Ansprüche 2 bis 9, **dadurch gekennzeichnet, dass** die Gehäuseteile (4, 5) über eine Schraubverbindung miteinander verbunden sind.

13. Anordnung nach einem der Ansprüche 2 bis 11, **dadurch gekennzeichnet, dass** zwischen den Gehäuseteilen (4, 5) zumindest ein Dichtelement angeordnet ist.

14. Verteilstruktur für den Transport von Temperiermedien, umfassend eine Anordnung (1) nach einem der vorherigen Ansprüche.

15. Kältemittelkreislauf für ein Elektrofahrzeug, umfassend eine Verteilstruktur nach Anspruch 14.
